# EUROPÄISCHE PATENTSCHRIFT

(11) **EP 0 694 467 B1**
(45) Veröffentlichungstag und Bekanntmachung des Hinweises auf die Patenterteilung: **14.10.1998**
(21) Anmeldenummer: 95111615.1
(22) Anmeldetag: 24.07.1995
(51) Int. Cl.: B62D 53/08

(54) **Sattelzugfahrzeug**
Semi-trailer tractor
Tracteur pour semi-remorque

(30) Priorität: 28.07.1994 DE 4426840
(43) Veröffentlichungstag der Anmeldung: 31.01.1996
(73) Patentinhaber: ROCKINGER Spezialfabrik für Anhängerkupplungen GmbH & Co., D-80935 München (DE)
(72) Erfinder: Wohlhüter, Gerhard, Dipl.-Ing., D-80997 München (DE)
(74) Vertreter: Weickmann, Heinrich, Dipl.-Ing.

(56) Entgegenhaltungen:
- EP-A- 0 052 792
- EP-A- 0 087 903
- DE-A- 2 927 422
- US-A- 3 082 021
- US-A- 4 762 334

## Beschreibung

Die Erfindung betrifft einen Sattelkupplungsbausatz zur Verwendung in einem Sattelzugfahrzeug, mit einem mindestens zwei Längsträger aufweisenden Zugfahrzeugrahmen, wobei der zur Befestigung an den Längsträgern vorgesehene Sattelkupplungsbausatz Lagerböcke, eine auf den Lagerböcken um eine in Fahrzeugquerrichtung verlaufende Achse schwenkbar gelagerte Sattelplatte sowie ein der Versteifung des Sattelkupplungsbausatzes in Fahrzeugquerrichtung dienendes Versteifungselement aufweist und das Versteifungselement an den Lagerböcken auf deren einander zugewandten Seiten befestigt ist.

Ein derartiger Sattelkupplungsbausatz ist beispielsweise aus der DE 29 27 422 A1 bekannt. Der bekannte Bausatz weist längs der Längsträger verschiebbare, mittels einer Verzahnung festlegbare Lagerböcke auf, umfassend jeweils einen auf dem jeweiligen Längsträger gleitenden Gleitkörper und ein als eigentlicher Lagerbock dienendes Kupplungsplattenlagerteil, das auf dem Gleitkörper ruht. Die beiden Gleitkörper sind über ein als Traverse bezeichnetes, leicht schräg zur Querrichtung verlaufendes, wohl als Versteifungselement bezeichenbares Verbindungselement starr miteinander verbunden, das an den Gleitkörpern auf deren einander zugewandten Seiten befestigt ist. Die Befestigungsstelle der Traverse am jeweiligen Gleitkörper liegt bezogen auf die Fahrzeuglängsrichtung vor bzw. hinter dem Kupplungsplattenlagerteil. In Querrichtung auf die Kupplungsplattenlagerteile wirkende Kräfte können dementsprechend nur durch die Gleitkörper abgestützt und dementsprechend höchstens mittelbar in die Traverse eingeleitet werden.

Ein aus der DE 41 42 363 A1 bekannter Sattelkupplungsbausatz für ein Sattelzugfahrzeug umfaßt neben einer Sattelplatte und neben Lagerböcken auch eine als Versteifungselement dienende Montageplatte, auf deren Oberseite die Lagerböcke befestigt sind und welche ihrerseits mittels Hilfsrahmenteilen mit dem Fahrzeugrahmen des Sattelzugfahrzeugs verbunden ist. Damit bei dieser Anordnung ein biegesteifer Anschluß zur Montageplatte erzielt wird, sind die Fußteile der Lagerböcke, mit welchen diese auf der Montageplatte befestigt sind, in Fahrzeugquerrichtung relativ groß bemessen. Durch diese große Breite der Lagerböcke wird für günstige Hebelverhältnisse bei der Einleitung von Kräften in die Montageplatte gesorgt, welche durch die Sattelplatte in Fahrzeugquerrichtung auf die Lagerböcke ausgeübt werden. Ferner sind die Lagerböcke zur Erzielung der erforderlichen Längssteifigkeit auch in Fahrtrichtung groß bemessen. Aufgrund dieser großen Längs- und Querabmessungen sind die Lagerböcke massiv und dementsprechend schwer ausgebildet.

Darüber hinaus weist die bekannte Montageplatte auch ein hohes Gewicht auf. Sie muß sich nämlich sowohl in Fahrtrichtung als auch in Fahrzeugquerrichtung bis über die Fußteile der Lagerböcke hinaus erstrecken, damit diese ordnungsgemäß auf ihr befestigt werden können. Diese Forderung führt in Verbindung mit den gemäß Vorstehendem erforderlichen Längsabmessungen der Lagerböcke zwangsläufig zu hohem Gewicht der Montageplatte.

Das hohe Gewicht der einzelnen Bauteile des bekannten Sattelkupplungsbausatzes schlägt sich selbstverständlich auch im Gesamtgewicht des Sattelzugfahrzeugs nieder, was wiederum zu schlechterer Ausnutzung des maximal zulässigen Gesamtgewichts des aus Sattelzugfahrzeug und Auflieger bestehenden Sattelzugs führt.

Demgegenüber ist es eine Aufgabe der Erfindung, einen Sattelkupplungsbausatz der eingangs genannten Art bereitzustellen, bei dem von der Sattelplatte auf die Lagerböcke ausgeübte Kräfte, insbesondere Querkräfte, effektiv in das Versteifungselement eingeleitet werden, um eine hohe Quersteifigkeit des Sattelkupplungsbausatzes zu erhalten. Zur Lösung dieser Aufgabe wird erfindungsgemäß vorgeschlagen, daß die Lagerböcke jeweils wenigstens ein zur verschwenkbaren Anlenkung der Sattelplatte dienendes Teil, wenigstens ein zur Befestigung am Fahrzeugrahmen dienendes Teil und wenigstens ein zur Verbindung mit dem Versteifungselement dienendes Teil umfassen, wobei der zur Verbindung mit dem Versteifungselement dienende Teil einen zur Befestigung des Versteifungselements dienenden Horizontalschenkel und einen zur Anbringung an dem zur Befestigung am Fahrzeugrahmen dienenden Teil dienenden Vertikalschenkel aufweist. Der Vertikalschenkel weist erfindungsgemäß eine Oberkante auf, die zusammen mit einer Oberkante des zur Anbringung am Fahrzeugrahmen dienenden Teils eine Auflagefläche für das zur verschwenkbaren Anlenkung der Sattelplatte dienende Teil bildet.

Dadurch, daß das zur Verbindung mit dem Versteifungselement dienende Teil einerseits mit seinem Horizontalschenkel am zur Befestigung am Fahrzeugrahmen dienenden Teil befestigt ist und andererseits zusammen mit dem zur Befestigung am Fahrzeugrahmen dienenden Teil eine Auflagefläche für das zur verschwenkbaren Anlenkung der Sattelplatte dienende Teil bildet, können auf das jeweilige zur verschwenkbaren Anlenkung der Sattelplatte dienende Teil ausgeübte Kräfte, insbesondere in Querrichtung wirkende Kräfte, wirkungsvoll abgestützt und - im Falle von in Querrichtung wirkenden Kräften - mittels des zur Verbindung mit dem Versteifungselement dienenden Teils in das Versteifungselement eingeleitet werden. Deshalb wird eine besonders hohe Quersteifigkeit des gesamten Sattelkupplungsbausatzes erreicht. Dies gilt insbesondere dann, wenn das zur Verbindung mit dem Versteifungselement dienende Teil ein Abschnitt des Versteifungselements ist oder - im Falle eines gegenüber dem Versteifungselement gesonderten Teils - mit dem Versteifungselement formschlüssig und biegesteif verbunden ist. Die Ausbildung des Sattelkupplungsbausatzes mit wenigstens einem zur verschwenkbaren Anlenkung der Sattelplatte dienenden Teil, wenigstens einem zur Befestigung am Fahrzeugrahmen dienenden Teil und wenigstens einem zur Verbindung mit dem Versteifungselement dienenden Teil zeichnet sich im übrigen durch eine besonders einfache Fertigung aus.

Dadurch, daß bei dem erfindungsgemäßen Sattelkupplungsbausatz das Versteifungselement an den Lagerböcken auf deren einander zugewandten Seiten befestigt ist, sind die Lagerböcke unmittelbar oder unter Verwendung von Hilfsrahmenteilen mittelbar, in jedem Fall jedoch ohne Zwischenlage einer Montageplatte, an den Längsträgern des Fahrzeugrahmens angebracht. Bei der Bemessung des Versteifungselements braucht daher nur darauf geachtet zu werden, daß die geforderte Quersteifigkeit des Sattelkupplungsbausatzes erzielt wird. Die Einleitung von in Fahrtrichtung auf die Lagerböcke ausgeübten Kräften in den Fahrzeugrahmen erfolgt nicht vermittels des Versteifungselements, so daß die Längsabmessungen der Fußteile der Lagerböcke erfindungsgemäß keinen Einfluß auf die Abmessungen des Versteifungselements haben. Das Versteifungselement kann daher in Fahrtrichtung kürzer bemessen sein als die Lagerböcke; auch weist es im Vergleich zu der herkömmlichen Montageplatte eine geringere Abmessung in Fahrzeugquerrichtung auf, da es sich seitlich nicht über die Lagerböcke hinaus erstreckt. Die reduzierten Abmessungen des Versteifungselements führen zu geringerem Gewicht und somit verbesserter Ausnutzung des zulässigen Gesamtgewichts des gesamten Sattelzuges. Die Gewichtseinsparung beträgt ausgehend von dem aus der DE 41 42 363 A1 bekannten Sattelkupplungsbausatz je nach Bauhöhe des Bausatzes über der Oberkante des Fahrzeugrahmens zwischen etwa 30 kg und etwa 60 kg.

Die geringere Längsabmessung des Versteifungselements hat darüber hinaus den zusätzlichen Vorteil, daß die Sattelplatte des erfindungsgemäßen Sattelkupplungsbausatzes im Vergleich zu jenen herkömmlicher Sattelkupplungsbausätze mit Montageplatte sich durch größere Winkelgängigkeit bei Verschwenken um die Fahrzeugquerachse auszeichnet, da die Störkontur der herkömmlichen Montageplatte entfällt.

Bevorzugt ist der zur verschwenkbaren Anlenkung der Sattelplatte dienende Teil auf die Auflagefläche aufgeschweißt. Der zur Verbindung mit dem Versteifungselement dienende Teil des Lagerbocks kann ein von dem Versteifungselement gesondertes Teil oder ein Abschnitt des Versteifungselements sein.

Hohe Quersteifigkeit bei gleichzeitig geringem Gewicht kann dadurch erzielt werden, daß das Versteifungselement von einem Profilteil gebildet ist, welches vorzugsweise einen im wesentlichen U-förmigen Querschnitt aufweist. Der im wesentlichen U-förmige Querschnitt kann hierbei beispielsweise auch ein Ω-förmiger oder hutförmiger Querschnitt sein. Grundsätzlich sind jedoch auch andere Profilquerschnitte einsetzbar, beispielsweise ein vollständig geschlossenes Kastenprofil.

Das Versteifungselement ist mit den Lagerböcken bevorzugt formschlüssig und vorzugsweise biegesteif verbunden, das heißt durch Verschweißen, Verschrauben, Vernieten oder dergleichen. Hierdurch kann eine zuverlässige Kraftübertragung zwischen den Lagerböcken und dem Versteifungselement sichergestellt werden, was die Erzeugung der gewünschten Quersteifigkeit begünstigt.

Die Lagerböcke können grundsätzlich als Gußteile gefertigt sein. Aufgrund höherer Materialfestigkeit und somit der Möglichkeit gewichtssparender Fertigung ist es jedoch bevorzugt, daß die Lagerböcke zumindest teilweise aus Schnittbearbeitungsschritten oder/und Stanzbearbeitungsschritten oder/und Biegebearbeitungsschritten unterzogenen Blechteilen gefertigt sind. Die Blechteile sind hierbei bevorzugt Brennschnitteile mit dem Vorteil kostengünstiger, einfacher und flexibler Fertigung. Unter Brennschnitt ist dabei auch ein unter Verwendung eines Lasers, beispielsweise eines CO₂-Lasers, durchgeführter Schnitt zu verstehen.

Die Quersteifigkeit des gesamten Sattelkupplungsbausatzes kann dadurch erhöht werden, daß in dem zur Befestigung am Fahrzeugrahmen dienenden Teil im wesentlichen vertikal verlaufende Rippen ausgebildet sind. Zusätzlich oder alternativ können an dem zur Befestigung am Fahrzeugrahmen dienenden Teil im wesentlichen vertikal verlaufende Stegbleche angebracht sein.

In einer ersten alternativen Weiterbildung des erfindungsgemäßen Sattelkupplungsbausatzes können die Lagerböcke an den Längsträgern durch Hilfsrahmenteile befestigt sein. Eine Einstellung des Abstands der Sattelplattenoberseite von der Fahrbahnoberfläche kann hierbei bei durch den Lkw-Hersteller vorgegebenem Abstand der Längsträgeroberkante des Fahrzeugrahmens von der Fahrbahnoberfläche in einfacher Weise dadurch erfolgen, daß in den Hilfsrahmenteilen mehrere Lochbilder zur Befestigung des jeweiligen Hilfsrahmenteils am Fahrzeugrahmen vorgesehen sind. Ferner kann eine entsprechende Einstellung in Fahrzeugquerrichtung in einfacher Weise dadurch erfolgen, daß in den Hilfsrahmenteilen oder/und den Lagerböcken mehrere Lochbilder vorgesehen sind zur Verbindung eines Lagerbocks mit einem jeweiligen Hilfsrahmenteil.

In einer zweiten alternativen Weiterbildung des erfindungsgemäßen Sattelkupplungsbausatzes können die Lagerböcke seitlich bis neben die Längsträger herunterreichen und an diesen unmittelbar befestigt sein. Bei Einsatz dieser Weiterbildung kann durch Wegfall der Hilfsrahmenteile eine weitere Gewichtseinsparung erzielt werden. Hierbei können die Lagerböcke zur Höheneinstellung mehrere Lochbilder zur Befestigung an den Längsträgern aufweisen. Ferner können zur Breiteneinstellung Futterbleche vorgesehen sein zur Zwischenlage zwischen einem Lagerbock und dem jeweiligen Längsträger.

Im folgenden wird die Erfindung an Hand der beiliegenden Zeichnung an einigen Ausführungsbeispielen näher erläutert werden. Es stellt dar:
- Figur 1: eine perspektivische Ansicht, teilweise in Explosionsdarstellung eines Teils eines Sattelzugfahrzeugs, welches mit einer ersten Ausführungsform des erfindungsgemäßen Sattelkupplungsbausatzes ausgerüstet ist;
- Figur 2: einen orthogonal zur Fahrtrichtung verlaufenden Schnitt durch einen Teil des Sattelkupplungsbausatzes gemäß Figur 1;
- Figur 3: einen orthogonal zur Fahrzeugquerrichtung verlaufenden Schnitt durch einen Teil des Sattelkupplungsbausatzes gemäß Figur 1;
- Figuren 4 bis 7: Ansichten ähnlich Figur 2 weiterer Ausführungsformen des erfindungsgemäßen Sattelkupplungsbausatzes;
- Figuren 8a und 8b: in der Horizontalebene verlaufende Schnitte von Montageteilen eines Lagerbocks zur Erläuterung zweier Möglichkeiten zur weiteren Erhöhung der Quersteifigkeit des erfindungsgemäßen Sattelkupplungsbausatzes;
- Figur 9: eine Ansicht ähnlich Figur 1 der weiteren Ausführungsform des erfindungsgemäßen Sattelkupplungsbausatzes;
- Figur 10: eine Ansicht ähnlich Figur 2 der weiteren Ausführungsform; und
- Figur 11: eine bei der Ausführungsform gemäß Figuren 9 und 10 verwendbare Verbindungsplatte.

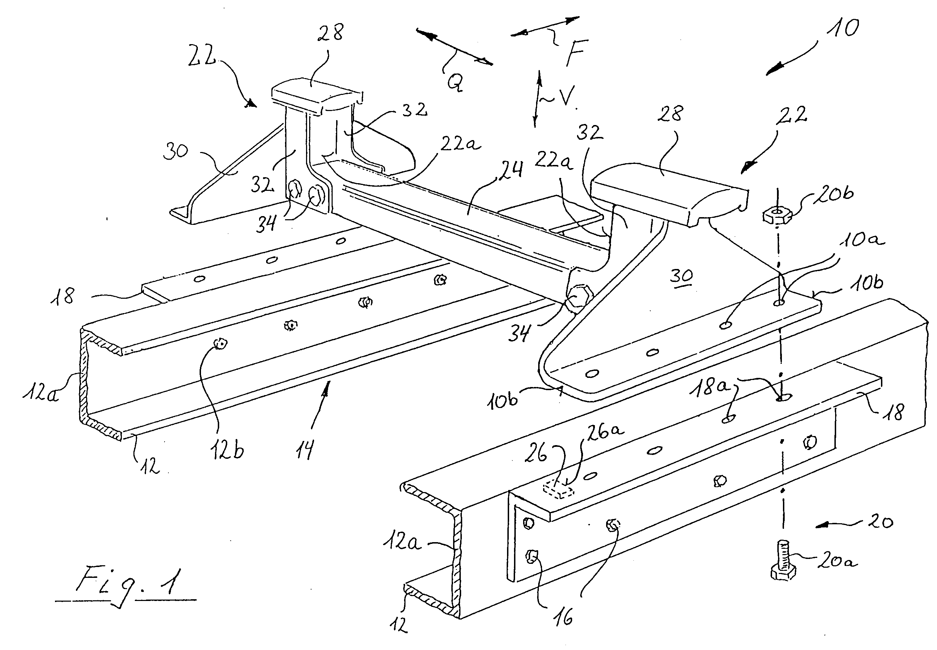

In Figur 1 ist der Kupplungsbereich eines Sattelzugfahrzeugs teilweise in Explosionsdarstellung gezeigt. Ein Sattelkupplungsbausatz 10 ist an zwei im wesentlichen als C-Profil ausgebildeten und sich im wesentlichen in Fahrtrichtung F des Sattelzugfahrzeugs erstreckenden Längsträgern 12 des Fahrzeugrahmens 14 befestigt. Die Längsträger 12 sind üblicherweise derart angeordnet, daß die Öffnungen der beiden C-Profile aufeinander zu weisen.

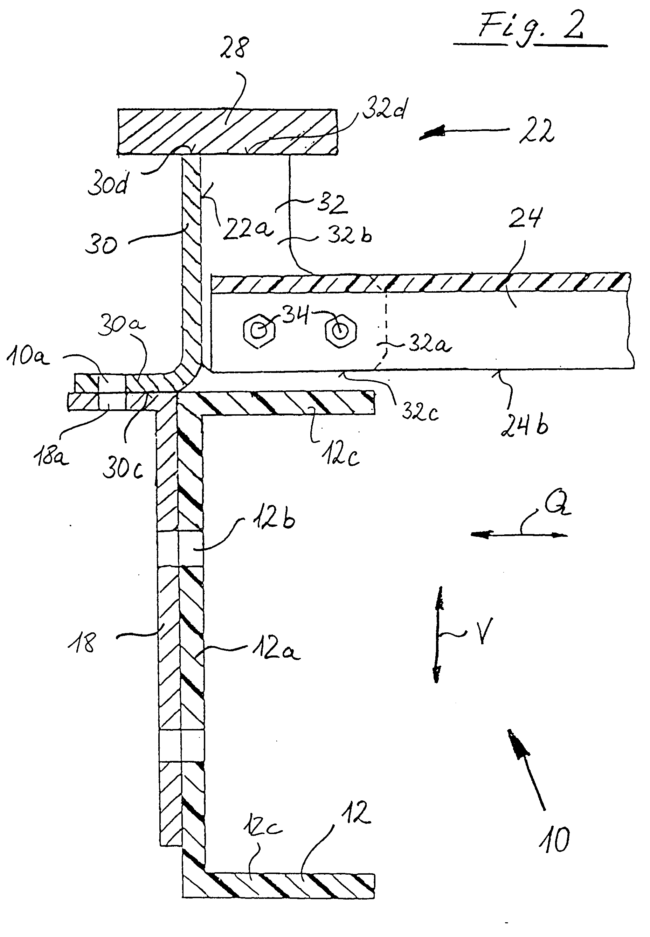

In den im wesentlichen vertikal verlaufenden Basisschenkeln 12a der Längsträger 12 des Fahrzeugrahmens 14 sind vom Fahrzeughersteller Bohrungen 12b (siehe Figur 2) zur Befestigung eines Aufbaus, beispielsweise des Sattelkupplungsbausatzes 10, vorgesehen. Weitere Bohrungen dürfen vom Aufbauhersteller in die Längsträger 12 und insbesondere in deren Querflansche 12c nicht eingebracht werden. An den Längsträgern 12 sind mittels Schraubverbindungen 16 Hilfsrahmenteile 18 mit L-förmigem Querschnitt befestigt, in die vom Aufbauhersteller beliebig Bohrungen eingebracht werden dürfen. In dem in Figur 1 dargestellten Ausführungsbeispiel ist der Sattelkupplungsbausatz 10 mit dem Fahrzeugrahmen 14 mittelbar verbunden. Hierzu durchsetzen Schraubverbindungen 20, bestehend aus Schraubbolzen 20a und Muttern 20b (in Figur 1 ist jeweils nur eines dieser Teile dargestellt) Befestigungsbohrungen 10a in dem Sattelkupplungsbausatz 10 und Befestigungsbohrungen 18a in den Hilfsrahmenteilen 18.

Der Sattelkupplungsbausatz 10 umfaßt gemäß Figur 1 zwei Lagerböcke 22, deren aufeinander zu weisende Seiten 22a mittels eines im wesentlichen in Fahrzeugquerrichtung Q verlaufenden Versteifungselement 24 miteinander verbunden sind, und eine (in Figur 1 der Übersichtlichkeit halber nicht dargestellte) Sattelplatte, die auf den Lagerböcken 22 um eine in Fahrzeugquerrichtung Q verlaufende Achse schwenkbar gelagert ist. Auf die Details des Aufbaus des Sattelkupplungsbausatzes 10 wird weiter unten noch ausführlich eingegangen werden.

Um gegebenenfalls verhindern zu können, daß die beim Betrieb des Sattelzugfahrzeugs auftretenden Zug-, Schubkräfte als Scherkräfte auf die Schraubverbindungen 20 einwirken, können in Fahrtrichtung F vor und hinter den Lagerböcken 22 Schubbleche 26 auf die Hilfsrahmenteile 18 aufgeschweißt werden. Von diesen optional vorgesehenen Schubblechen 26 ist in Figur 1 lediglich eines gestrichelt dargestellt. Die Schubbleche 26 liegen mit Anschlagflächen 26a an Gegenanschlagflächen 10b des Sattelkupplungsbausatzes 10 formschlüssig an, um jederzeit die von diesen übertragenen Kräfte aufnehmen zu können. Zur Aufnahme von Seitenkräften können ferner in Fahrtrichtung F neben den Lagerböcken 22 (nicht dargestellte) Schubbleche auf die Hilfsrahmenteile 18 aufgeschweißt sein. Zusätzlich sind zur Vermeidung von Scherkräften auf die Schraubverbindungen 20 die Bohrungen 10a im Sattelkupplungsbausatz 10 und 18a in den Hilfsrahmenteilen 18, die von den Schraubbolzen 20a durchsetzt werden, mit einem derart großen Querschnitt ausgebildet, daß die Schraubbolzen 20a in ihnen mit Übermaß aufgenommen sind. Somit müssen die Schraubverbindungen 20 lediglich vertikale Zugkräfte aufnehmen, unterliegen jedoch im wesentlichen keinen Scherkräften.

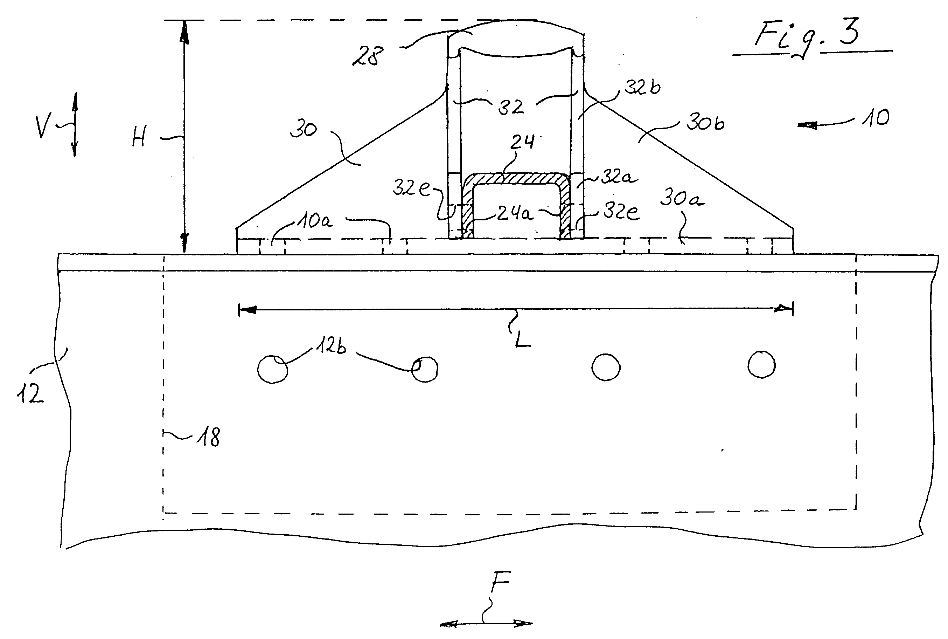

Im folgenden soll an Hand der Figuren 2 und 3 der Aufbau des Sattelkupplungsbausatzes 10 näher erläutert werden. Die Lagerböcke 22 gemäß der in den Figuren 1 bis 3 dargestellten ersten Ausführungsform des Sattelkupplungsbausatzes 10 umfassen jeweils ein zur verschwenkbaren Anlenkung der Sattelplatte dienendes Teil 28 (im folgenden kurz "Hammerkopf" genannt), ein zur Befestigung am Fahrzeugrahmen 14 dienendes Teil 30 (im folgenden kurz "Montageelement" genannt) und zwei zur Verbindung mit dem Versteifungselement 24 dienende Teile 32 (im folgenden kurz "Verbindungsplatten" genannt).

Die Lagerung einer Sattelplatte auf mit Hammerköpfen 28 versehenen Lagerböcken 22 ist aus der DE 30 40 925 A1 an sich bekannt. Daher sei hinsichtlich der Einzelheiten der Hammerkopf-Lagerung auf die DE 30 40 925 A1 verwiesen. Der Hammerkopf 28 ist üblicherweise als Guß- oder Schmiedeteil ausgebildet. Festzuhalten ist jedoch, daß der erfindungsgemäße Sattelkupplungsbausatz nicht auf diese Art der Lagerung der Sattelplatte beschränkt ist. Vielmehr kann auch jede andere geeignete Art der Lagerung verwendet werden.

Das Montageelement 30 weist gemäß Figur 2 in Fahrtrichtung F gesehen einen L-förmigen Querschnitt auf. Der horizontal verlaufende Schenkel beziehungsweise Flansch 30a der L-Form dient zur Befestigung des Lagerbocks 22 am Hilfsrahmenelement 18. In diesem Horizontalflansch 30a sind daher die vorstehend beschriebenen Befestigungsbohrungen 10a ausgebildet. Gemäß Figur 3 ist die in Fahrtrichtung F gemessene Länge L des Montageelements 30 größer als die in Vertikalrichtung V gemessene Höhe H des Montageelements 30. Hierdurch erhält das Montageelement 30 die für den Betrieb des Sattelkupplungsbausatzes 10 erforderliche Längssteifigkeit. Der im wesentlichen vertikal verlaufende L-Schenkel 30b verjüngt sich gemäß Figur 3 vom Befestigungsflansch 30a ausgehend, wo er wie dieser die Länge L aufweist, in Vertikalrichtung V bis zum Hammerkopf 28 hin, wo seine Abmessung in Fahrtrichtung F im wesentlichen jener des Hammerkopfs 28 entspricht.

An dem Montageelement 30 sind zwei Verbindungsplatten 32 angeschweißt, welche im wesentlichen L-förmige Gestalt aufweisen, wobei ein Horizontalschenkel 32a der L-Form im wesentlichen in Querrichtung Q verläuft und ein Vertikalschenkel 32b der L-Form im wesentlichen in Vertikalrichtung V verläuft. Auf die durch die Oberkanten 30d der Montageelemente 30 und 32d der beiden Verbindungsplatten 32 gebildete C-förmige Auflagefläche ist der Hammerkopf 28 des Lagerbocks 22 aufgeschweißt. In die Horizontalschenkel 32a der Verbindungsplatten 32 sind in der in den Figuren 1 bis 3 dargestellten Ausführungsform Befestigungsbohrungen 32e eingebracht, die zur Verbindung des Lagerbocks 22 mit dem Versteifungselement 24 dienen. Das von einem U-förmigen Profilteil mit nach unten weisender Öffnung der U-Form gebildete Versteifungselement 24 weist entsprechende Befestigungsbohrungen 24a auf. Die Befestigungsbohrungen 24a und 32e sind derart bemessen, daß die (in Figur 1 dargestellten Schraubbolzen 34 mit ihren Außenumfangsflächen an den Innenumfangsflächen der Bohrungen 24a und 32e anliegen, so daß das Versteifungslement 24 mit den Verbindungsplatten 32 und somit den Lagerböcken 22 insgesamt formschlüssig und biegesteif verbunden sind. Selbstverständlich kann auch jede andere Art der formschlüssigen Verbindung der Lagerböcke und des Versteifungselement eingesetzt werden, beispielsweise Vernieten oder Verschweißen. Verschrauben hat jedoch den Vorteil, daß die formschlüssige Verbindung bei Bedarf wieder gelöst werden kann.

Die formschlüssige Verbindung hat im Vergleich mit der grundsätzlich ebenfalls einsetzbaren reibschlüssigen Verbindung den Vorteil, daß die Einleitung von Kräften von den Lagerböcken 22 in das Versteifungselement 24 beziehungsweise vom Versteifungselement 24 in die Lagerböcke 22 auch bei großen Kräften stets zuverlässig sichergestellt ist.

Die zuverlässige Übertragung von Kräften zwischen diesen Teilen ist für die eigentliche Funktion des Versteifungselements 24, nämlich für ausreichende Quersteifigkeit des Sattelkupplungsbausatzes 10 zu sorgen, eine Grundvoraussetzung. Wäre das Versteifungselement 24 nicht vorhanden, so könnten bei Einleitung einer in Querrichtung Q gerichteten Kraft von der Sattelplatte über die Hammerköpfe 28 in die Lagerböcke 22 der jeweilige Lagerbock 22 diese Kraft nur über seinen Befestigungsflansch 30a an den ihm zugeordneten Längsträger 12 des Fahrzeugrahmens 14 weiterleiten. Da auf diesem Kraftübertragungsweg äußerst ungünstige Hebelverhältnisse vorliegen, besteht die Gefahr des seitlichen Wegknickens der Lagerböcke 22. Durch das Versteifungselements 24 kann die in einen Lagerbock 22 eingeleitete Kraft mittels der von den in Querrrichtung Q aufeinanderfolgend angeordneten Schraubbolzen 34 vorgesehene formschlüssige und biegesteife Verbindung zumindest teilweise an den dem jeweils anderen Lagerbock 22 zugeordneten Längsträger 12 des Fahrzeugrahmens 14 weitergeleitet werden. Auf diesem Kraftübertragungsweg herrschen weitaus günstigere Hebelverhältnisse, so daß die Lagerböcke 22 und somit der Sattelkupplungsbausatz 10 insgesamt höhere Quersteifigkeit aufweisen.

Das Montageelement 30 und die Verbindungsplatten 32 sind vorzugsweise aus Blech gefertigt, wobei die Blechteile beispielsweise unter Einsatz der Brennschnitt-Technik hergestellt sind. Unter Brennschnitt sei hierbei nicht nur das Schneiden mittels einer Flamme verstanden, sondern auch das Schneiden mittels eines Lasers, beispielsweise eines CO₂-Lasers, oder dergleichen. Die zugeschnittenen Teile werden dann weiteren Bearbeitungsschritten unterzogen, beispielsweise werden sowohl in das Montageelement 30 als auch in die Verbindungsplatten 32 die Befestigungslöcher 10a beziehungsweise 32e gestanzt. Schließlich können die Blechteile auch einer Biegebearbeitung unterzogen werden. So wird beispielsweise die L-Form des Montageelements 30 durch Biegen erhalten. Auch die Hilfsrahmenteile 18 können durch Schnitt-, Stanz- und Biegebearbeitung hergestellt sein.

Der erfindungsgemäße Sattelkupplungsbausatz 10 zeichnet sich im Vergleich mit den aus dem Stand der Technik bekannten Sattelkupplungsbausätzen durch seine Leichtbauweise und die aus der Gewichtseinsparung resultierende Erhöhung der Nutzlast bei konstantem zulässigen Gesamtgewicht des aus Sattelzugfahrzeug und Sattelauflieger bestehenden Sattelzuges aus. Insbesondere weist das erfindungsgemäß vorgesehene, die Lagerböcke 22 auf ihren einander zugewandten Seiten 22a miteinander verbindende Versteifungselement 24 wesentlich geringere Abmessungen auf als die im Stand der Technik vorgesehenen Montageplatten. Neben der geringeren Erstreckung in Querrichtung Q ist das Versteifungselement 24 in Fahrtrichtung F derart bemessen, daß es zwischen die beiden Verbindungsplatten 32 paßt; es weist in Fahrtrichtung F somit vorzugsweise eine geringere Abmessung auf als der Hammerkopf 28. Darüber hinaus weisen die Lagerböcke nur dort sich in Querrichtung Q erstreckende Teile auf, wo es zur ordnungsgemäßen Funktion des Sattelkupplungsbausatzes unbedingt erforderlich ist. So bilden die Oberkanten 32d der Verbindungsteile 32 einen Teil der Auflagefläche für die Hammerköpfe 28 und dienen die Horizontalschenkel 32a der Verbindungsteile 32 dazu, daß der Sattelkupplungsbausatz 10 die gewünschte Quersteifigkeit erhält. Schließlich dient der Befestigungsflansch 30a zur Anbringung des Lagerbocks 22 am Fahrzeugrahmen 14. Und auch in Fahrtrichtung F erstreckt sich lediglich das eine zur Erzielung der gewünschten Längssteifigkeit erforderliche Montageelement 30.

Die Unterkanten 32c (siehe Figur 2) der Verbindungsplatten 32 und 24b des Versteifungselements 24 verlaufen vorzugsweise geringfügig, vorzugsweise um die vertikale Dicke des Befestigungsflansches 32a, beispielsweise 5 bis 10 mm, oberhalb der Unterkante des Befestigungsflansches 30a der Montageplatte 30. Auf diese Weise ist gewährleistet, daß die Verbindungsplatten 32 nicht auf dem oberen Horizontalschenkel 12c der C-förmigen Längsträger 12 aufliegen. Eine derartige Auflage ist aus den gleichen Gründen unerwünscht, aus denen es, wie vorstehend erwähnt, den Aufbauherstellern untersagt ist, in diese Horizontalschenkel 12c Bohrungen einzubringen. Durch eine derartige Auflage beziehungsweise durch derartige Bohrungen werden nämlich die mechanischen Eigenschaften, beispielsweise die Torsionsfähigkeit, des Fahrzeugrahmens 14 negativ beeinflußt.

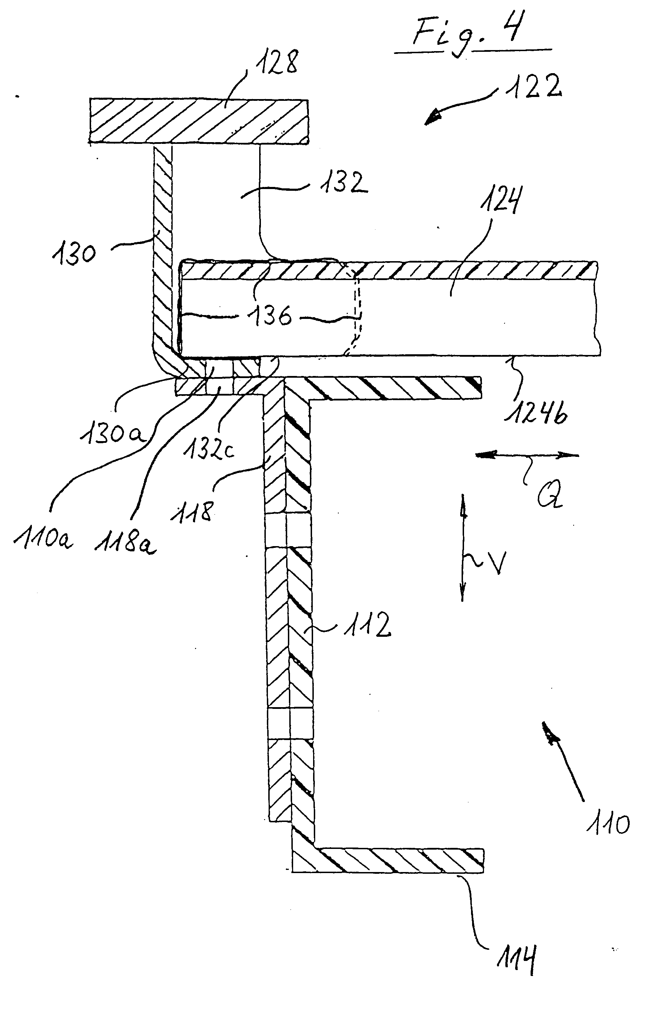

In Figur 4 ist eine zweite Ausführungsform des erfindungsgemäßen Sattelkupplungsbausatzes dargestellt, welche im wesentlichen der in den Figuren 1 bis 3 dargestellten Ausführungsform entspricht. Analoge Teile sind in Figur 4 daher mit gleichen Bezugszeichen versehen, wie in Figuren 1 bis 3, jedoch vermehrt um die Zahl 100. Die Ausführungsform gemäß Figur 4 wird im folgenden nur insoweit beschrieben werden als sie sich von der Ausführungsform gemäß Figuren 1 bis 3 unterscheidet, auf deren Beschreibung hiermit ansonsten ausdrücklich verwiesen wird.

Der Sattelkupplungsbausatz 110 unterscheidet sich von dem Sattelkupplungsbausatz 10 zum einen dadurch, daß das Versteifungselement 124 zur formschlüssigen und biegesteifen Verbindung mit den Lagerböcken 122 mit deren Verbindungsplatten 132 bei 136 verschweißt ist. Zum anderen weisen die Befestigungsflansche 130a der Montageelemente 130 bei der Ausführungsform gemäß Figur 4 aufeinander zu. Sie bilden somit eine Auflage für die Unterkanten 132c der Verbindungsplatten 132 und 124b des Versteifungselements 124. Diese Art der Anordnung der Befestigungsflansache 130a dient jedoch hauptsächlich dazu, es dem Aufbauhersteller zu ermöglichen, aus identisch ausgebildeten Blechteilen 118, 130 und 132 Sattelkupplungsbausätze 110 für wenigstens zwei Fahrzeugtypen fertigen zu können. Der Aufbauhersteller kann nämlich aus den ihm bekannten Breitenabmessungen der Fahrzeugrahmen 114 dieser Fahrzeugtypen bei vorgegebenem Abstand der Hammerköpfe 128 und vorgegebener Länge des Versteifungselements 124 in einfacher Weise berechnen, wo die Befestigungsbohrungen 110a und 118a in das Montageelement 130 und das Hilfsrahmenteil 118 eingebracht werden müssen, damit sich durch Montage der Bauelemente der Lagerböcke in der Anordnung gemäß Figur 3 ein Sattelkupplungsbausatz für den Fahrzeugtyp mit dem breiteren Rahmen und durch Montage der Bauelemente der Lagerböcke in der Anordnung gemäß Figur 4, das heißt einfaches Drehen der Montageelemente 130 um 180° um die Vertikalachse V vor der Montage, ein Sattelkupplungsbausatz für den Fahrzeugtyp mit dem schmäleren Rahmen ergibt. Durch Vorsehen einer Mehrzahl von Lochbildern 110a und 118a können sogar noch mehr Rahmenbreiten bedient werden. Diese Maßnahmen haben den Vorteil, daß der Aufbauhersteller die einzelnen Bauteile des Sattelkupplungsbausatzes in größeren Stückzahlen fertigen kann, was die Gestehungskosten senkt. Darüber hinaus führt die Anwendbarkeit des Sattelkupplungsbausatzes bei mehreren Fahrzeugtypen zu wesentlichen Erleichterungen bei der Lagerhaltung.

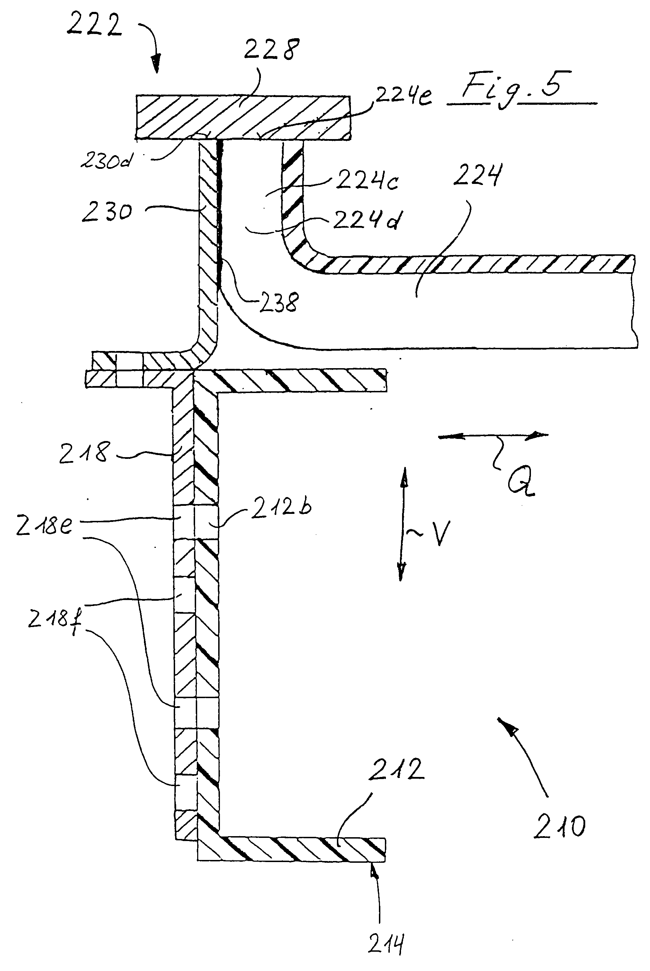

In Figur 5 ist eine weitere Ausführungsform des erfindungsgemäßen Sattelkupplungsbausatzes dargestellt, welche im wesentlichen der in den Figuren 1 bis 3 dargestellten Ausführungsform entspricht. Analoge Teile sind in Figur 5 daher mit gleichen Bezugszeichen versehen, wie in Figuren 1 bis 3, jedoch vermehrt um die Zahl 200. Die Ausführungsform gemäß Figur 5 wird im folgenden nur insoweit beschrieben werden als sie sich von der Ausführungsform gemäß Figuren 1 bis 3 unterscheidet, auf deren Beschreibung hiermit ansonsten ausdrücklich verwiesen wird.

Der Sattelkupplungsbausatz 210 unterscheidet sich von dem Sattelkupplungsbausatz 10 zum einen dadurch, daß die Lagerböcke 222 keine den Verbindungsplatten 32 entsprechenden Teile aufweisen. Bei der Ausführungsform gemäß Figur 5 wird die Funktion dieser Verbindungsplatten 32 von einem nach oben umgebogenen Abschnitt 224c des Versteifungselements 224 übernommen. Der im wesentlichen vertikal verlaufende Abschnitt 224c ist mit den freien Enden der Seitenflansche 224d der U-Form bei 238 mit dem Montageelement 230 verschweißt. Die oberen Ränder 230d und 224e des Montageelements 230 und des aufgebogenen Abschnitts 224c des Versteifungselements 224 bilden eine rechteckförmige und somit im Vergleich mit der Ausführungsform gemäß Figuren 1 bis 3 größere und stabilere Auflagefläche für den Hammerkopf 228.

Zum anderen sind die Hilfsrahmenteile 218 zur Anpassung an verschiedene gewünschte Sattelplattenhöhen mit einer Mehrzahl von Lochbildern 218e und 218f versehen, von denen im montierten Zustand jeweils eines (in Figur 5 das Lochbild 218e) dem in den Fahrzeuglängsträgern 212 vorgesehenen Lochbild 212b gegenüberliegt. Ferner kann das Montageelement 230 zur Anpassung an verschiedene Fahrzeugrahmenbreiten ähnlich der Ausführungsform gemäß Figur 4 auch um 180° gedreht mit dem Versteifungselement 224 verschweißt werden.

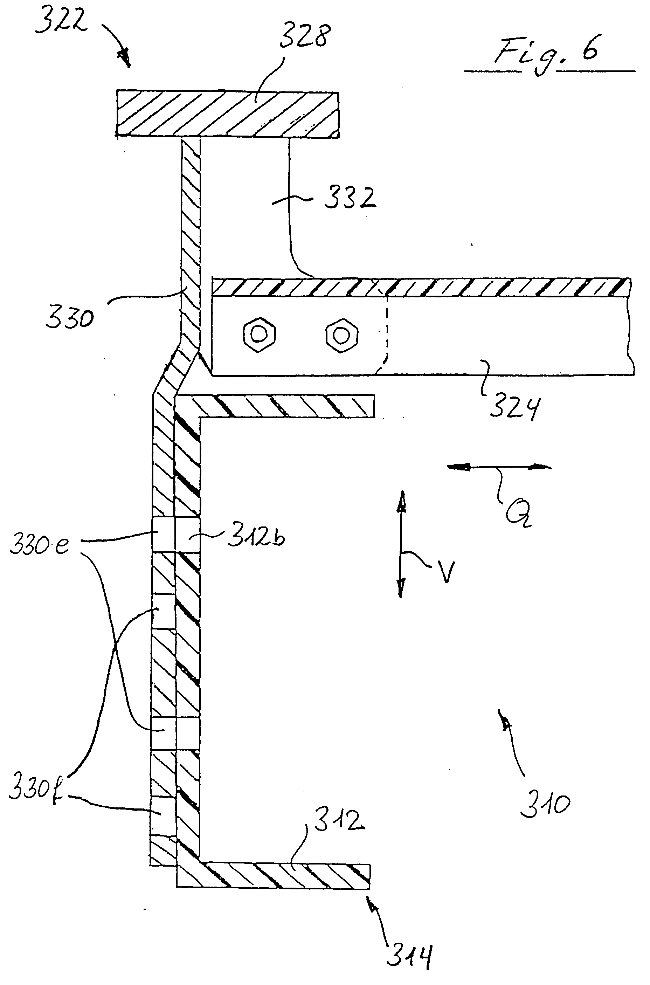

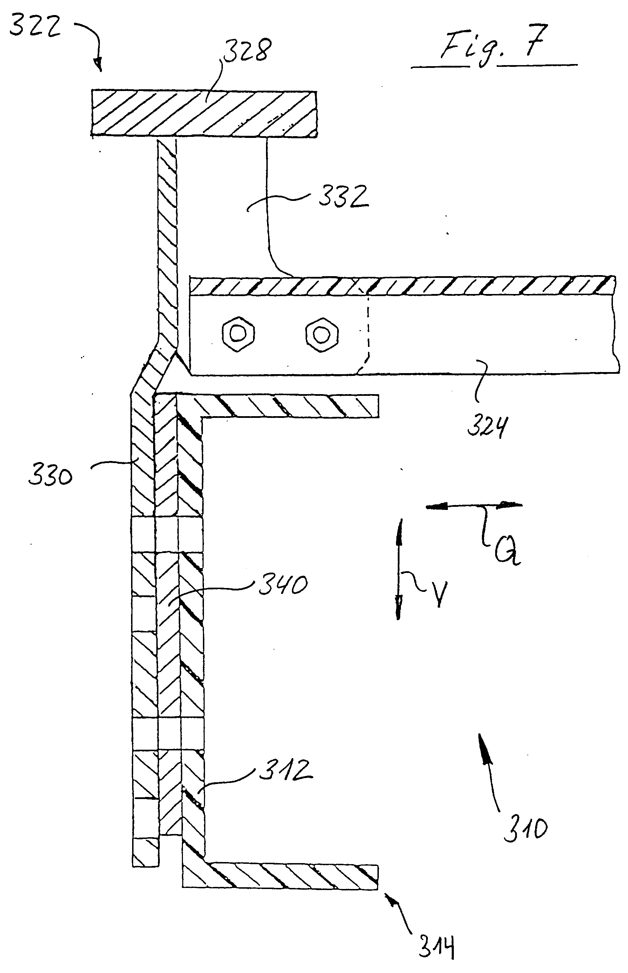

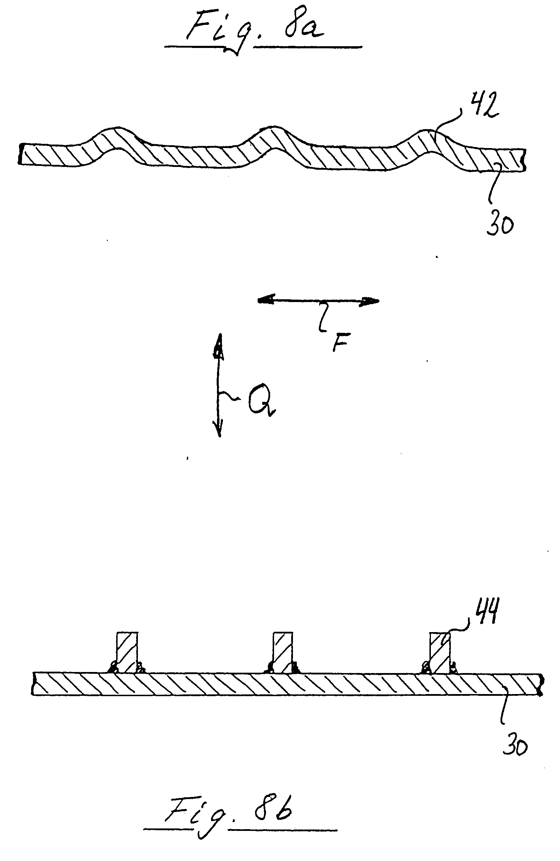

In Figur 6 ist eine weitere Ausführungsform des erfindungsgemäßen Sattelkupplungsbausatzes dargestellt, welche im wesentlichen der in den Figuren 1 bis 3 dargestellten Ausführungsform entspricht. Analoge Teile sind in Figur 6 daher mit gleichen Bezugszeichen versehen, wie in Figuren 1 bis 3, jedoch vermehrt um die Zahl 300. Die Ausführungsform gemäß Figur 6 wird im folgenden nur insoweit beschrieben werden als sie sich von der Ausführungsform gemäß Figuren 1 bis 3 unterscheidet, auf deren Beschreibung hiermit ansonsten ausdrücklich verwiesen wird.

Bei der Ausführungsform gemäß Figur 6 übernehmen die Montageelemente 330 zusätzlich zu ihrer eigentlichen Funktion im Bereich der Lagerböcke 322 ferner die Funktion der Hilfsrahmenteile 18. Der Sattelkupplungsbausatz 310 wird vermittels der nach unten bis neben die Fahrzeuglängsträger 312 verlängerten Montageelemente 330 unmittelbar mit dem Fahrzeugrahmen 314 verschraubt. Die Zusammenfassung von Montageelement und Hilfsrahmenteil zu einer Baueinheit hat den Vorteil, daß die Befestigungsflansche von Montageelement und Hilfsrahmenteil sowie deren Schraubverbindungen sowohl als gewichterhöhende Teile als auch als mögliche Fehlerquelle wegfallen.

Zur Anpassung an verschiedene gewünschte Sattelplattenhöhen sind die Montageel mente 330 mit einer Mehrzahl von Lochbildern 330e und 330f versehen, von denen im montierten Zustand jeweils eines (in Figur 6 das Lochbild 330e) dem in den Fahrzeuglängsträgern 312 vorgesehenen Lochbild 312b gegenüberliegt. Festzuhalten ist, daß auch bei den vorstehend beschriebenen Ausführungsformen diese Art dar Einstellung der Höhe der Sattelplatte über der Fahrbahn durch Vorsehen einer entsprechenden Anzahl von Lochbildern im Vertikalflansch des Hilfsrahmenteil 18 beziehungsweise 118 beziehungsweise 218 angewendet werden kann.

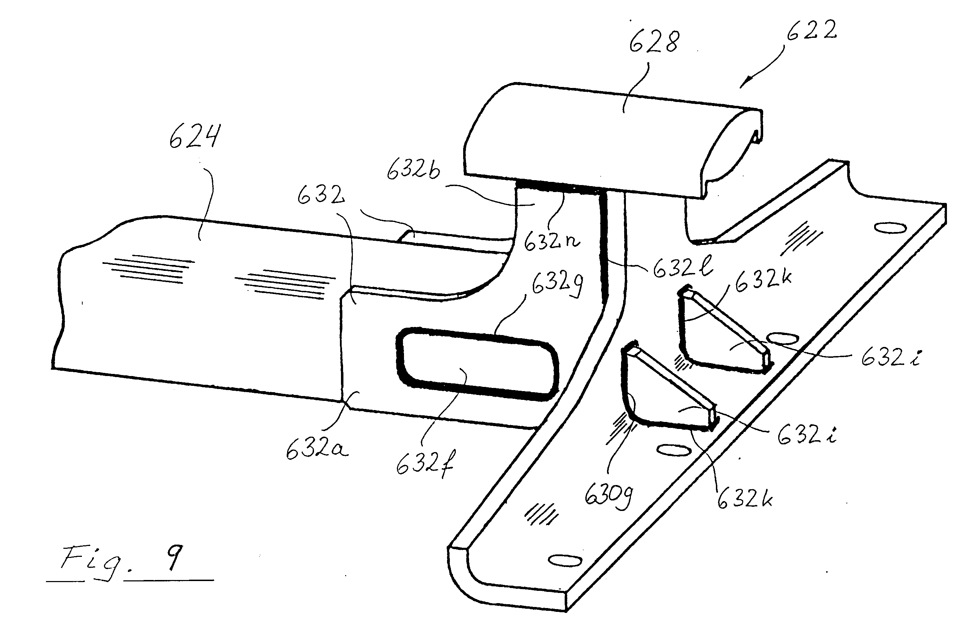

Die Breitenanpassung des Sattelkupplungsbausatzes 310 kann ähnlich der Ausführungsform gemäß Figur 4 durch Drehen der Montageelemente 330 um 180° um die Vertikalachse V vorgesehen werden. Darüber hinaus kann eine Anpassung an unterschiedliche Fahrzeugrahmenbreiten durch Zwischenlage von Futterblechen 340 zwischen Montageelement 330 und Fahrzeuglängsträger 312 vorgenommen werden, wie dies in Figur 7 dargestellt ist.

Festzuhalten ist, daß auch bei der Ausführungsform gemäß den Figuren 6 und 7 auf gesonderte Verbindungsplatten 332 verzichtet und deren Funktion von einem nach oben gebogenen Abschnitt des Versteifungselements übernommen werden kann, ähnlich der Ausführungsform gemäß Figur 5.

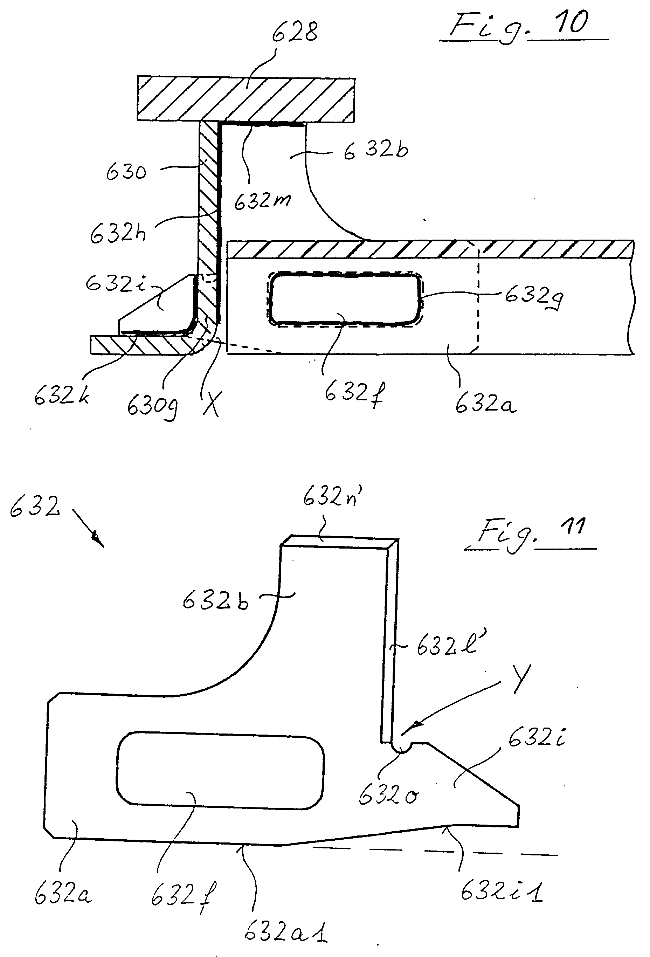

In den Figuren 8a und 8b sind zwei Möglichkeiten zur weiteren Erhöhung der Quersteifigkeit der vorstehend beschriebenen Ausführungsformen dargestellt. Hierzu sind gemäß Figur 8 zumindest ein Teil der vertikal verlaufenden Abschnitte zumindest das Montageelements 30 gemäß Figur 8a mit vertikal verlaufenden Rippen 42 ausgebildet, beziehungsweise sind gemäß Figur 8b an diesen Teilen vertikal verlaufende Stegbleche 44 angeschweißt. Diese beiden in den Figuren 8a und 8b als Alternativen dargestellten Möglichkeiten können selbstverständlich auch in Kombination angewendet werden.

Die in den Figuren 9 bis 11 dargestellte weitere Ausführungsform des erfindungsgemäßen Sattelkupplungsbausatzes entspricht im wesentlichen der in den Figuren 1 bis 3 dargestellten Ausführungsform. Analoge Teile sind daher in den Figuren 9 bis 11 mit den gleichen Bezugszeichen versehen wir in den Figuren 1 bis 3, jedoch vermehrt um die Zahl 600. Die Ausführungsform gemäß Figuren 9 bis 11 wird im folgenden nur insoweit beschrieben werden, als sie sich von der Ausführungsform gemäß Figuren 1 bis 3 unterscheidet, auf deren Beschreibung ansonsten hiermit ausdrücklich verwiesen wird.

Der Sattelkupplungsbausatz 610 unterscheidet sich von dem Sattelkupplungsbausatz 10 beispielsweise dadurch, daß die Lagerböcke 622 (von denen in Figur 9 lediglich einer dargestellt ist) mit dem Versteifungselement 624 verschweißt ist. Hierzu sind die L-förmig ausgebildeten Verbindungsplatten 632 in ihren Horizontal- oder Basis-Schenkeln 632a mit Durchbrechungen 632f ausgebildet, die sich von dem freien Ende des Basis-Schenkels 632a bis in den Verbindungsbereich dieses Schenkels 632a mit dem Vertikal- oder Steher-Schenkel 632b der Verbindungsplatte 632 erstreckt.

Das Versteifungselement 624 und die Verbindungsplatte 632 sind längs des gesamten Umfangsrands der Durchbrechung 632f mittels einer sogenannten Lochschweißung 632g miteinander verbunden. Diese Lochschweißung hat den Vorteil, daß die Schweißnaht 632g weder einen Anfang noch ein Ende aufweist. Durch diese Art der Verschweißung der Lagerböcke 622 mit dem Versteifungselement 624 werden die Endstellen streckenartiger Schweißnähten vermieden, welche im Betrieb Schwachstellen für die auftretenden Beanspruchungen, sogenannte Kerbstellen, darstellen.

Eine weitere Kerbstelle würde sich beim Verschweißen (bei 632h) einer rein L-förmigen Verbindungsplatte, ähnlich der in Figur 2 dargestellten Verbindungsplatte 32, mit dem Montageelement 630 im dem Bereich ergeben, in dem die Außenkanten der beiden L-Schenkel 632a und 632b zusammenlaufen; dieser Bereich ist in Figur 12 mit X bezeichnet. Zur Vermeidung dieser Kerbstelle X wurden erfindungsgemäß zwei sich in ihrer Wirkung ergänzende Maßnahmen ergriffen: Zum einen ist die Verbindungsplatte 632 in der Verlängerung des Basis-Schenkels 632a mit einem Vorsprung 632i ausgebildet, der eine in dem Montagelement 630 vorgesehene Öffnung 630g durchsetzt und somit im Bereich der potentiellen Kerbstelle X eine Unstetigkeit der Verbindungsplatte, wie sie die das Abknicken der L-Form darstellen würde, vermeidet. Zum anderen endet die Schweißnaht 632h deutlich oberhalb des Bereichs X, so daß bei Biegebeanspruchung um die Fahrzeuglängsachse im Bereich X auftretende Spannungen vom Material der Verbindungsplatte 632 elastisch aufgenommen werden können, ohne zu einer Verletzung der Schweißnaht 632h zu führen. Die von außen sichtbare Schweißnaht 632l (siehe Figur 9) zwischen Verbindungsplatte 632 und Montageelement 630 endet in der gleichen Höhe wie die entsprechende "innere" Schweißnaht 632h.

Der Vorsprung 632i ist mit dem Montageelement 630 an dessen vom Versteifungselement 624 abgewandten Seite an sämtlichen Verbindungskanten dieser beiden Teile mittels einer umlaufenden Endlosnaht 632k verschweißt. Auch diese Endlosnaht 632k bietet den Vorteil der "Kerbstellenentschärfung". Neben dem vorstehend genannten Vorteil ergibt sich aus den beiden je Lagerbock 622 vorgesehenen Vorsprüngen 632i der Verbindungsplatten 632 eine Erhöhung der Biegesteifigkeit um die Fahrzeuglängsachse.

Zur "Entschärfung" der Kerbstelle, die sich im Bereich des Übergangs der Oberkante des Vorsprungs 632i in den Vertikalschenkel 632b ergibt (dieser Bereich ist in Figur 13 mit Y bezeichnet), ist in diesem Bereich Y ein im wesentlichen halbkreisförmiger Ausschnitt 632o vorgesehen. Etwaig auftretende Beanspruchungen werden vom Umfang des Halbkreises 632o auf einen größeren Materialbereich der Verbindungsplatte 632 verteilt, als dies ein bei Fehlen des Ausschnitts 632o vorhandener rechtwinkliger Übergang könnte.

Schließlich erhebt sich die Unterkante 632i1 des Vorsprungs 632i über die Unterkante 632a1 des Basisschenkels 632a. Hierdurch kann die Höhe des Basisschenkels 632 und somit der Lochschweißung 632g größer bemessen werden, wodurch die Kraftübertragung zwischen Lagerbock 622 und Versteifungselement 624 verbessert wird.

Zu den Lochschweißungen 632g ist noch nachzutragen, daß die erfindungsgemäße Sattelkupplungsbaugruppe 610 aus zwei vorgefertigten Lagerböcken 622 und einem Versteifungsprofil 624 in einem einzigen Einspannvorgang fertiggestellt werden kann, da die Durchbrechungen 632f der Verbindungsplatten 632 alle in einfacher Weise von außen zugänglich sind.

Zur Verbindung zwischen Verbindungsplatte 632 und Hammerkopf 628 dienen die "innere" Schweißnaht 632m (siehe Figur 10) und die "äußere" Schweißnaht 632n (siehe Figur 9). Zu den "äußeren" Schweißnähten 632l und 632n ist noch nachzutragen, daß diese bei dem Ausführungsbeispiel der Figuren 9 bis 11 als sogenannte HV-Nähte ausgeführt sind. Die entsprechenden Vorbereitungskanten der Verbindungplatte sind in Figur 13 bei 632l' und 632n' dargestellt. Grundsätzlich können jedoch auch Schweißnähte anderer Art vorgesehen sein.

Zu den gegebenenfalls vorzunehmenden Biegebearbeitungsschritten bei der Fertigung der Lagerböcke aus Blechteilen ist nachzutragen, daß im Hinblick auf die mechanische Festigkeit der gebogenen Blechteile darauf zu achten ist, daß diese orthogonal zur Walzrichtung der Blechteile gebogen werden.

Nachzutragen ist ferner, daß zur Formgebung der Blechteile für den Lagerbock neben dem aufgrund seiner hohen Maßgenauigkeit bevorzugten Brennschnitt grundsätzlich auch eine Fertigung der Blechteile durch Stanzen in Betracht gezogen wird.

## Patentansprüche

1. Sattelkupplungsbausatz zur Verwendung in einem Sattelzugfahrzeug mit einem mindestens zwei Längsträger (22; 212) aufweisenden Zugfahrzeugrahmen (14; 214), wobei der zur Befestigung an den Längsträgern (12; 212) vorgesehene Sattelkupplungsbausatz (10) Lagerböcke (22; 222), eine auf den Lagerböcken (22; 222) um eine in Fahrzeugquerrichtung verlaufende Achse (Q) schwenkbar gelagerte Sattelplatte sowie ein der Versteifung des Sattelkupplungsbausatzes (10) in Fahrzeugquerrichtung (Q) dienendes Versteifungselement (24; 224) aufweist und das Versteifungselement (24; 224) an den Lagerböcken (22; 222) auf deren einander zugewandten Seiten (22a) befestigt ist,
**dadurch gekennzeichnet,**
daß die Lagerböcke (22; 222) jeweils wenigstens ein zur verschwenkbaren Anlenkung der Sattelplatte dienendes Teil (28; 228), wenigstens ein zur Befestigung am Fahrzeugrahmen (14; 214) dienendes Teil (30; 230) und wenigstens ein zur Verbindung mit dem Versteifungselement (24; 224) dienendes Teil (32; 224c) umfassen,
wobei der zur Verbindung mit dem Versteifungselement (24; 224) dienende Teil (32; 224c) einen zur Befestigung des Versteifungselements (24; 224) dienenden Horizontalschenkel (32a; 224) und einen zur Anbringung an dem zur Befestigung am Fahrzeugrahmen (14; 214) dienenden Teil (30; 230) dienenden Vertikalschenkel (32b; 224c) aufweist, wobei der Vertikalschenkel (32b; 224c) eine Oberkante (32d; 224e) aufweist, die zusammen mit einer Oberkante (30d; 230d) des zur Anbringung am Fahrzeugrahmen (14; 214) dienenden Teils (30; 230) eine Auflagefläche für das zur verschwenkbaren Anlenkung der Sattelplatte dienende Teil (28; 228) bildet.

2. Sattelkupplungsbausatz nach Anspruch 1,
**dadurch gekennzeichnet,**
daß der zur verschwenkbaren Anlenkung der Sattelplatte dienende Teil (28; 228) auf die Auflagefläche aufgeschweißt ist.

3. Sattelkupplungsbausatz nach Anspruch 1 oder 2,
**dadurch gekennzeichnet,**
daß der zur Verbindung mit dem Versteifungselement (24) dienende Teil (32) des Lagerbocks (22) ein von dem Versteifungselement (24) gesondertes Teil ist.

4. Sattelkupplungsbausatz nach Anspruch 1 oder 2,
**dadurch gekennzeichnet,**
daß der zur Verbindung mit dem Versteifungselement (224) dienende Teil (224c) des Lagerbocks (222) ein Abschnitt des Versteifungselements (224) ist.

5. Sattelkupplungsbausatz nach einem der Ansprüche 1 bis 4,
**dadurch gekennzeichnet**, daß das Versteifungselement (24) von einem Profilteil (24) gebildet ist, welches vorzugsweise einen im wesentlichen U-förmigen Querschnitt aufweist.

6. Sattelkupplungsbausatz nach einem der Ansprüche 1 - 5,
**dadurch gekennzeichnet**, daß das Versteifungselement (24) mit den Lagerböcken (22) formschlüssig und vorzugsweise biegesteif verbunden ist.

7. Sattelkupplungsbausatz nach einem der Ansprüche 1 bis 6,
**dadurch gekennzeichnet**, daß die Lagerböcke (22) zumindest teilweise aus Schnittbearbeitung oder/und Stanzbearbeitung oder/und Biegebearbeitung unterzogenen Blechteilen (30, 32) gefertigt sind.

8. Sattelkupplungsbausatz nach Anspruch 7,
**dadurch gekennzeichnet**, daß die Blechteile (30, 32) Brennschnitteile sind.

9. Sattelkupplungsbausatz nach einem der Ansprüche 1 bis 8,
**dadurch gekennzeichnet**, daß in dem zur Befestigung am Fahrzeugrahmen (14) dienenden Teil (30) im wesentlichen vertikal verlaufende Rippen (42) ausgebildet sind.

10. Sattelkupplungsbausatz nach einem der Ansprüche 1 bis 9,
**dadurch gekennzeichnet**, daß an dem zur Befestigung am Fahrzeugrahmen (14) dienenden Teil (30) im wesentlichen vertikal verlaufende Stegbleche (44) angebracht sind.

11. Sattelkupplungsbausatz nach einem der Ansprüche 1 bis 10,
**dadurch gekennzeichnet**, daß die Lagerböcke (22) an den Längsträgern (12) durch Hilfsrahmenteile (18) befestigt sind.

12. Sattelkupplungsbausatz nach Anspruch 11,
**dadurch gekennzeichnet**, daß in den Hilfsrahmenteilen (218) mehrere Lochbilder (218e, 218f) zur Befestigung des jeweiligen Hilfsrahmenteils (218) am Fahrzeugrahmen (214) vorgesehen sind.

13. Sattelkupplungsbausatz nach Anspruch 11 oder 12,
**dadurch gekennzeichnet**, daß in den Hilfsrahmenteilen (18) oder/und den Lagerböcken (22) mehrere Lochbilder vorgesehen sind zur Verbindung eines Lagerbocks (22) mit einem jeweiligen Hilfsrahmenteil (18).

14. Sattelkupplungsbausatz nach einem der Ansprüche 1 bis 10,
**dadurch gekennzeichnet**, daß die Lagerböcke (322) seitlich bis neben die Längsträger (312) herunterreichen und an diesen unmittelbar befestigt sind.

15. Sattelkupplungsbausatz nach Anspruch 14,
**dadurch gekennzeichnet**, daß die Lagerböcke (322) mehrere Lochbilder (330e, 330f) aufweisen zur Befestigung an den Längsträgern (312).

16. Sattelkupplungsbausatz nach Anspruch 14 oder 15,
**dadurch gekennzeichnet**, daß Futterbleche (340) vorgesehen sind zur Zwischenlage zwischen einem Lagerbock (322) und dem jeweiligen Längsträger (318).

17. Sattelkupplungsbausatz nach einem der Ansprüche 1 bis 16,
**dadurch gekennzeichnet**, daß das zur Verbindung mit dem Versteifungselement (24) dienende Teil (32) im wesentlichen L-förmig ausgebildet ist, mit einem zur Befestigung mit dem Versteifungselement dienenden Basis-Schenkel (32a) der L-Form und einem Steher-Schenkel (32b) zur Anbringung an dem zur Befestigung am Fahrzeugrahmen (14) dienenden Teil (30).

18. Sattelkupplungsbausatz nach Anspruch 17,
**dadurch gekennzeichnet**, daß in dem Basis-Schenkel (632a) der L-Form (632) eine, insbesondere in Längsrichtung dieses Schenkels (632a) verlaufende, Durchbrechung (632f) ausgebildet ist, die sich vorzugsweise bis in den Verbindungsbereich der beiden Schenkel (632a, 632b) der L-Form (632) erstreckt und insbesondere zur Bildung einer Lochschweißung dient.

19. Sattelkupplungsbausatz nach Anspruch 17 oder 18,
**dadurch gekennzeichnet**, daß das zur Verbindung mit dem Versteifungselement (624) dienende Teil (632) im Bereich der Verbindung der beiden L-Schenkel (632a, 632b) einen Vorsprung (632i) aufweist, der im wesentlichen in der Verlängerung des Basis-Schenkels (632a) der L-Form angeordnet ist.

20. Sattelkupplungsbausatz nach Anspruch 19,
**dadurch gekennzeichnet**, daß der Vorsprung (632i) im Bereich des Übergangs seines oberen Rands in den Steherschenkel (632b) der L-Form einen, vorzugsweise im wesentlichen halbkreisförmigen, Ausschnitt (632o) aufweist.

21. Sattelkupplungsbausatz nach Anspruch 19 oder 20,
**dadurch gekennzeichnet**, daß der Vorsprung (632i) eine zugeordnete Öffnung (630g) durchsetzt, die in dem zur Befestigung am Fahrzeugrahmen dienenden Teil (630) ausgebildet ist.

22. Sattelkupplungsbausatz nach Anspruch 21,
**dadurch gekennzeichnet**, daß der die Öffnung (630g) durchsetzende Teil des Vorsprungs (632i) mit dem zur Befestigung am Fahrzeugrahmen dienenden Teil (630) auf dessen dem Versteifungselement (624) abgewandten Seite, vorzugsweise längs aller Kontaktlinien mit diesem Teil (630), verschweißt ist (bei 632k).

23. Sattelkupplungsbausatz nach einem der Ansprüche 17 bis 22,
**dadurch gekennzeichnet**, daß eine Schweißnaht (632h, 632l), die auf der dem Versteifungselement (624) zugewandten Seite des zur Befestigung am Fahrzeugrahmen dienenden Teils (630) zu dessen Verbindung mit dem Steherschenkel (632b) dient, oberhalb des unteren Rands 632a1 des Basisschenkels (632a) endet.

## Claims

1. A semi-trailer coupling kit for use in a semi-trailer towing vehicle with a towing vehicle chassis (14;214) having at least two longitudinal members (22;212) [sic], wherein the semi-trailer coupling kit (10) provided for mounting on the longitudinal members (12;212) has bearing blocks (22;222), a semi-trailer plate pivotably mounted on the bearing blocks (22;222) about an axis (Q) extending in the transverse direction of the vehicle, as well as a stiffening element (24;224) serving to stiffen the semi-trailer coupling kit (10) in the transverse direction (Q) of the vehicle, and the stiffening element (24;224) is fastened to the bearing blocks (22;222) on their mutually facing sides (22a), characterised in that the bearing blocks (22;222) each comprise at least one part (28,228) serving for the pivotable articulation of the semi-trailer plate, at least one part (30;230) serving for fastening to the vehicle chassis (14;214) and at least one part (32;224c) serving for connection to the stiffening element (24;224), wherein the part (32;224c) serving for connection to the stiffening element (24;224) has a horizontal limb (32a;224) and a vertical limb (32b;224c) serving for attachment to the part (30;230) serving for fastening to the vehicle chassis (14;214), wherein the vertical limb (32b;224c) has an upper edge (32d;224e) which together with an upper edge (30d;230d) of the part (30;230) serving for attachment to the vehicle chassis (14;214) forms a supporting surface for the part (28;228) serving for the pivotable articulation of the semi-trailer plate.

2. A semi-trailer coupling kit according to Claim 1, characterised in that the part (28;228) serving for the pivotable articulation of the semi-trailer plate is welded on to the supporting surface.

3. A semi-trailer coupling kit according to Claim 1 or Claim 2, characterised in that the part (32) of the bearing block (22) serving for the connection to the stiffening element (24) is a separate part from the stiffening element (24).

4. A semi-trailer coupling kit according to Claim 1 or 2, characterised in that the part (224c) of the bearing block (222) serving for the connection to the stiffening element (224) is a portion of the stiffening element (224).

5. A semi-trailer coupling kit according to any one of Claims 1 to 4, characterised in that the stiffening element (24) is formed by a profile part (24) which is preferably of substantially U-shaped cross-section.

6. A semi-trailer coupling kit according to any one of Claims 1 to 5, characterised in that the stiffening element (24) is connected with the bearing blocks (22) in a positive-locking and preferably rigid manner.

7. A semi-trailer coupling kit according to any one of Claims 1 to 6, characterised in that the bearing blocks (22) are produced at least partly from sheet metal parts (30,32) which have undergone cutting treatment and/or stamping treatment and/or bending treatment.

8. A semi-trailer coupling kit according to Claim 7, characterised in that the sheet metal parts (30,32) are flame cut parts.

9. A semi-trailer coupling kit according to any one of Claims 1 to 8, characterised in that substantially vertically extending ribs (42) are formed in the part (30) serving for fastening to the vehicle chassis (14).

10. A semi-trailer coupling kit according to any one of Claims 1 to 9, characterised in that substantially vertically extending sheet metal webs (44) are attached to the part (30) serving for fastening to the vehicle chassis (14).

11. A semi-trailer coupling kit according to any one of Claims 1 to 10, characterised in that the bearing blocks (22) are fastened to the longitudinal members (12) by auxiliary chassis parts (18).

12. A semi-trailer coupling kit according to Claim 11, characterised in that a plurality of hole patterns (218e, 218f) for fastening the respective auxiliary chassis part (218) to the vehicle chassis (214) are provided in the auxiliary chassis parts (218).

13. A semi-trailer coupling kit according to Claim 11 or 12, characterised in that a plurality of hole patterns are provided in the auxiliary chassis parts (18) for connecting a bearing block (22) to a respective auxiliary chassis part (18).

14. A semi-trailer coupling kit according to any one of Claims 1 to 10, characterised in that the bearing blocks (322) extend laterally downwards as far as adjacent the longitudinal member (312) and are fastened directly thereto.

15. A semi-trailer coupling kit according to Claim 14, characterised in that the bearing blocks (322) have a plurality of hole patterns (330e,330f) for fastening to the longitudinal members (312).

16. A semi-trailer coupling kit according to Claim 14 or 15, characterised in that filler plates (340) are provided for interposition between a bearing block (322) and the respective longitudinal member (318).

17. A semi-trailer coupling kit according to any one of Claims 1 to 16, characterised in that the part (32) serving for connection to the stiffening element (24) is substantially L-shaped, with a base limb (32a) of the L-shape serving for fastening to the stiffening element and an upright limb (32b) for attachment to the part (30) serving for fastening to the vehicle chassis (14).

18. A semi-trailer coupling kit according to Claim 17, characterised in that an opening (632f) is formed in the base limb (632a) of the L-shape (632) and extends, in particular, in the longitudinal direction of this limb (632a), which opening preferably extends into the connecting region of the two limbs (632a,632b) of the L-shape (632) and, in particular, serves to form a slot welding.

19. A semi-trailer coupling kit according to Claim 17 or 18, characterised in that in the vicinity of the connection of the two L-limbs (632a,632b) the part (632) serving for connection to the stiffening element (624) has a projection (632i) which is disposed substantially in the extension of the base limb (632a) of the L-shape.

20. A semi-trailer coupling kit according to Claim 19, characterised in that in the vicinity of the transition of its upper edge into the upright limb (632b) of the L-shape the projection (632i) has a preferably substantially semi-circular cut-out (632o).

21. A semi-trailer coupling kit according to Claim 19 or 20, characterised in that the projection (632i) passes through an associated opening (630g) which is formed in the part (630) serving for fastening to the vehicle chassis.

22. A semi-trailer coupling kit according to Claim 21, characterised in that the part of the projection (632i) passing through the opening (630g) is welded to the part (630) serving for fastening to the vehicle chassis on the side of said part remote from the stiffening element (624), preferably along all contact lines with this part (630).

23. A semi-trailer coupling kit according to Claims 17 to 22, characterised in that a weld seam (632h,632l), which on the side of the part (630) used for fastening to the vehicle chassis and nearest the stiffening element (624) serves for the connection of said part with the upright limb (632b), ends above the lower edge (632a1) of the base limb (632a).

## Revendications

1. Ensemble d'attelage de semi-remorque destiné à être utilisé dans un tracteur de semi-remorque, comportant un cadre de tracteur (14; 214) présentant au moins deux longerons (22; 21), l'ensemble d'attelage de semi-remorque destiné à être fixé sur les longerons (12; 212), comportant des supports (22; 222), une plaque de sellette montée pivotante autour d'un axe (Q) s'étendant dans la direction transversale du véhicule sur les supports (22; 222), ainsi qu'un raidisseur (24; 224) servant au renfort de l'attelage de semi-remorque (10) dans la direction transversale (Q) du véhicule et le raidisseur (24; 224) étant fixé sur les supports (22; 222), sur leurs côtés (22a) opposés l'un à l'autre,
**caractérisé**
en ce que les supports (22; 222) comportent chacun au moins un élément (28; 228), servant à l'articulation pivotable de la plaque de sellette, au moins un élément (30; 230) servant à la fixation sur le cadre de véhicule (14; 214) et au moins un élément (32; 224c) servant à la liaison avec le raidisseur (24; 224), l'élément (32; 224c), servant à la liaison avec le raidisseur (24; 224), présentant une branche horizontale (32a; 224) servant à la fixation du raidisseur (24; 224), et une branche verticale (32b; 224c) servant à l'application sur l'élément (30; 230) servant à la fixation sur le cadre de véhicule (14; 214), la branche verticale (32b; 224c) présentant un bord supérieur (32d; 224e), qui forme, avec un bord supérieur (30d; 230d) de l'élément (30; 230) servant à l'application sur le cadre de véhicule (14; 214), une surface d'appui pour l'élément (28; 228) servant à l'articulation pivotable de la plaque de sellette.

2. Ensemble d'attelage de semi-remorque selon la revendication 1,
**caractérisé**
en ce que l'élément (28; 228) servant à l'articulation pivotable de la plaque de sellette est soudé sur la surface d'appui.

3. Ensemble d'attelage de semi-remorque selon la revendication 1 ou 2,
**caractérisé**
en ce que l'élément (32) du support (22) servant à la liaison avec le raidisseur (24), est un élément séparé du raidisseur (24).

4. Ensemble d'attelage de semi-remorque selon la revendication 1 ou 2,
**caractérisé**
en ce que l'élément (224c) du support (222) servant à la liaison avec le raidisseur (224), est une partie du raidisseur (224).

5. Ensemble d'attelage de semi-remorque selon l'une des revendications 1 à 4,
**caractérisé**
en ce que le raidisseur (24) est formé par un élément profilé (24), qui présente de préférence une section sensiblement en U.

6. Ensemble d'attelage de semi-remorque selon l'une des revendications 1 à 5,
**caractérisé**
en ce que le raidisseur (24) est relié aux supports (22) par complémentarité de forme et de préférence de manière rigide en flexion.

7. Ensemble d'attelage de semi-remorque selon l'une des revendications 1 à 6,
**caractérisé**
en ce que les supports (22) sont fabriqués au moins en partie à partir d'éléments en tôle (30, 32) soumis à un usinage par coupe ou/et à un usinage par estampage ou/et à un usinage par pliage.

8. Ensemble d'attelage de semi-remorque selon la revendication 7,
**caractérisé**
en ce que les éléments en tôle (30; 32) sont des éléments découpés au chalumeau.

9. Ensemble d'attelage de semi-remorque selon l'une des revendications 1 à 8,
**caractérisé**
en ce que des nervures (42) sensiblement verticales sont formées dans l'élément (30) servant à la fixation sur le cadre de véhicule (14).

10. Ensemble d'attelage de semi-remorque selon l'une des revendications 1 à 9,
**caractérisé**
en ce que des âmes en tôle (44) sensiblement verticales sont montées sur l'élément (30) servant à la fixation sur le cadre de véhicule (14).

11. Ensemble d'attelage de semi-remorque selon l'une des revendications 1 à 10,
**caractérisé**
en ce que les supports (22) sont fixés sur les longerons (12) par des éléments de cadre auxiliaires (18).

12. Ensemble d'attelage de semi-remorque selon la revendication 11,
**caractérisé**
en ce que dans les éléments de cadre auxiliaires (218) sont prévues plusieurs dispositions de trous (218e, 218f) pour la fixation de chaque élément de cadre auxiliaire (218) sur le cadre de véhicule (214).

13. Ensemble d'attelage de semi-remorque selon la revendication 11 ou 12,
**caractérisé**
en ce que dans les éléments de cadre auxiliaires (18) ou/et les supports (22) sont prévues plusieurs dispositions de trous pour la liaison d'un support (22) avec chaque élément de cadre auxiliaire (18).

14. Ensemble d'attelage de semi-remorque selon l'une des revendications 1 à 10,
**caractérisé**
en ce que les supports (322) s'étendent vers le bas, latéralement, jusqu'à côté des longerons (312) et sont directement fixés sur ceux-ci.

15. Ensemble d'attelage de semi-remorque selon la revendication 14,
**caractérisé**
en ce que les supports (322) présentent plusieurs dispositions de trous (330e, 330f) pour la fixation sur les longerons (312).

16. Ensemble d'attelage de semi-remorque selon la revendication 14 ou 15,
**caractérisé**
en ce que sont prévues des tôles de fourrure (340) destinées à former une couche intermédiaire entre un support (322) et le longeron (318) correspondant.

17. Ensemble d'attelage de semi-remorque selon l'une des revendications 1 à 16,
**caractérisé**
en ce que l'élément (32) servant à la liaison avec le raidisseur (24), est sensiblement en forme de L, avec une branche de base (32a) de la forme en L, servant à la fixation avec le raidisseur, et une branche de montant (32b) pour l'application sur l'élément (30) servant à la fixation sur le cadre de véhicule (14).

18. Ensemble d'attelage de semi-remorque selon la revendication 17,
**caractérisé**
en ce que dans la branche de base (632a) de la forme en L (632) est formé un ajour (632f), s'étendant en particulier dans la direction longitudinale de cette branche (632a), qui s'étend de préférence jusque dans la zone de liaison des deux branches (632a, 632b) de la forme en L (632) et sert en particulier à la formation d'une soudure en bouchon.

19. Ensemble d'attelage de semi-remorque selon la revendication 17 ou 18,
**caractérisé**
en ce que l'élément (632), servant à la liaison avec le raidisseur (624), présente une saillie (632i) dans la région de la liaison des deux branches de L (632a, 632b), qui est disposée sensiblement dans le prolongement de la branche de base (632a) de la forme en L.

20. Ensemble d'attelage de semi-remorque selon la revendication 19,
**caractérisé**
en ce que la saillie (632i) présente une découpe (632o) de préférence sensiblement en forme de demi-cercle, dans la région de la transition entre son bord supérieur et la branche verticale (632b) de la forme en L.

21. Ensemble d'attelage de semi-remorque selon la revendication 19 ou 20,
**caractérisé**
en ce que la saillie (632i) traverse une ouverture (630g) correspondante, qui est formée dans la partie (630) servant à la fixation sur le cadre de véhicule.

22. Ensemble d'attelage de semi-remorque selon la revendication 21,
**caractérisé**
en ce que la partie de la saillie (632i), traversant l'ouverture (630g), est soudée (en 632k) avec l'élément (630) servant à la fixation sur le cadre de véhicule, sur son côté opposé au raidisseur (624), de préférence le long de toutes les lignes de contact avec cet élément (630).

23. Ensemble d'attelage de semi-remorque selon l'une des revendications 17 à 22,
**caractérisé**
en ce qu'un cordon de soudure (632h, 632l), qui sert à sa liaison avec la branche verticale (632b), sur le côté, tourné à l'opposé du raidisseur (624), de l'élément (630) servant à la fixation sur le cadre de véhicule, se termine au-dessus du bord inférieur (632a1) de la branche de base (632a).
